**Europäisches Patentamt**

**European Patent Office**

**Office européen des brevets**

(19)

(11) Veröffentlichungsnummer: **0 332 209 B1**

(12) # EUROPÄISCHE PATENTSCHRIFT

(45) Veröffentlichungstag der Patentschrift:
16.10.91 Patentblatt 91/42

(51) Int. Cl.⁵: **F16B 7/00**

(21) Anmeldenummer: **89104293.9**

(22) Anmeldetag: **10.03.89**

---

(54) **Rohr.**

---

(30) Priorität: **10.03.88 DE 8803245 U**

(43) Veröffentlichungstag der Anmeldung:
**13.09.89 Patentblatt 89/37**

(45) Bekanntmachung des Hinweises auf die
Patenterteilung:
**16.10.91 Patentblatt 91/42**

(84) Benannte Vertragsstaaten:
**DE ES FR GB IT NL**

(56) Entgegenhaltungen:
**CH-A- 405 961**
**DE-A- 2 725 921**
**DE-A- 3 526 729**
**DE-C- 958 701**

(73) Patentinhaber: **AL-KO KOBER AG**
**Ichenhauser Strasse 14**
**W-8871 Kötz 2 (DE)**

(72) Erfinder: **Iffländer, Wolfgang J.F.**
**Kiebitzbrink 79a**
**W-2800 Bremen 33 (DE)**

(74) Vertreter: **Ernicke, Hans-Dieter, Dipl.-Ing. et al**
**Schwibbogenplatz 2b**
**W-8900 Augsburg (DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Rohr mit den Merkmalen des Oberbegriffs im Hauptanspruch.

Es ist bekannt, Rohre von größerer Länge oder Rohre mit komplizierterer Formgebung aus mehreren Einzelteilen aufzubauen und diese fest und dauerhaft miteinander zu verbinden. Hierzu werden beispielsweise Rohrstücke direkt miteinander verbunden. Dies hat den Nachteil, daß sich bei den meist aus Stahl bestehenden Rohrstücken eine hohe Korrosionsgefahr ergibt. Die Rohrstücke reiben bei Belastung an der Verbindungsstelle aneinander, wodurch auch aufgebrachte Schutzschichten zerstört werden.

Aus der DE-C-958701 ist es für zug- und druckfeste Rohrverbindungen von Baukonstruktionen bekannt, zwei Rohre formschlüssig ineinanderzustecken und den dabei zwischen den Rohrwänden entstehenden Zwischenraum mit einem Füllstoff auszuspritzen. Der Füllstoff wird erst nach dem Zusammenfügen der Rohrstücke eingebracht, was einen erheblichen Arbeits- und Kostenaufwand bedingt. Es ist außerdem nur sehr schwer sicherzustellen und zu überwachen, ob der eingebrachte Füllstoff den Zwischenraum vollständig ausfüllt und damit alle eingeleiteten Belastungen sicher übertragen kann. Insbesondere die Zugfestigkeit der Rohrverbindung kann problematisch werden, da die Rohrstücke nicht direkt, sondern über den Füllstoff miteinander verbunden sind und der Füllstoff bei Zugbelastung auf Scherung beansprucht wird.

Aus der DE-A-2725921 ist ferner noch eine mehrteilige Hohlstange bekannt, bei der die Stangenstücke an der Verbindungsstelle stumpf aneinandergestoßen sind. Die gegenseitige Verankerung erfolgt durch ein in beide Stangenenden gestecktes Rohr, das jeweils mit einem Stangenstück verschraubt ist. Diese Verbindungsform ist empfindlich gegenüber Biegebelastungen, wobei die Stabilität der Verbindung von der Stabilität und Paßgenauigkeit des eingesteckten Rohres abhängt. Zwischen den Stangenenden besteht auch hier keine direkte Verbindung, so daß Zugkräfte über das eingesteckte Rohr übertragen werden müssen.

Es ist daher Aufgabe der vorliegenden Erfindung, ein mehrteiliges Rohr aufzuzeigen, das einfach aufgebaut ist und dabei eine hohe Betriebssicherheit und einen guten Korrosionsschutz aufweist.

Die Erfindung löst diese Aufgabe mit den Merkmalen im Kennzeichen des Hauptanspruches.

Mit der erfindungsgemäßen Ausbildung sind die beiden Rohrstücke unter dichter Zwischenlage einer Hülse formschlüssig ineinander geführt. Sie stützen sich über die Zwischenhülse umfangsseitig aneinander ab, wobei sich durch die dichte Anlage dieser Teile untereinander eine hohe Stabilität des Rohres an der Verbindungsstelle ergibt. Die Zwischenhülse dient auch dem Korrosionsschutz, da sie einen unmittelbaren Kontakt der Rohrstücke untereinander verhindert.

Das eine Rohrstück weist ein eingezogenes Ende auf, auf dem die Zwischenhülse sitzt und mit dem es in das andere Rohrstück ragt. Alternativ kann das eine Rohrstück auch einen Aufweitung besitzen. Der Einzug hat jedoch den Vorteil, daß er eine exakte Positionierung der Zwischenhülse ermöglicht und auch optisch günstiger als eine Aufweitung ist. Aus dem letztgenannten Grund empfiehlt es sich ferner, den Durchmesser des eingezogenen Endes der Hülsen- und Rohrwanddicke entsprechend zur verringern. Außerhalb des eingezogenen Bereiches besitzt dieses Rohrstück dadurch den gleichen Außendurchmesser wie das andere Rohrstück, so daß das Rohr insgesamt eine im wesentlichen durchgehende Außenkontur zeigt.

Um den Verbund und die Belastbarkeit der Verbindungsstelle zu sichern, ist eine Quersicherung vorgesehen, die alle Teile durchsetzt. Vorzugsweise sind Rückhalteorgane vorgesehen, die in entsprechende Mantelöffnungen der verschiedenen Teile eingreifen. Das Rückhalteorgan kann in unterschiedlicher Weise, z.B. als Querstift, Schraube oder dgl. ausgebildet sein.

Besonders günstig ist ein Rückhalteorgan in Form eines nach innen gedrückten Präge- oder Stanzlappens am außenliegenden Rohrstück. Zum Zusammenstecken der Rohrstücke bedarf es keiner weiteren Arbeitsvorgänge, um den Verbund zu sichern. Ein weiterer Vorteil besteht in der direkten und damit spielarmen gegenseitigen Verriegelung der Rohrstücke. Präge- oder Stanzlappen sind auch kostengünstig herzustellen und ermöglichen eine nach dem Zusammenstecken unlösbare Rohrverbindung. Hierzu besitzt der Lappen einen entgegen der Aufsteckrichtung schräg nach innen geneigten Boden, der beim Zusammenstecken der Rohrstücke federnd ausweicht, in Gegenrichtung aber sperrt.

In der Ausführungsvariante als Stanzlappen kann der Boden hierzu an zwei oder drei Seiten freigestanzt und schräg zum Rohrinneren abgebogen sein.

Stabiler und haltbarer ist allerdings ein Prägelappen, der an den beiden quer zur Rohr-Längsachse liegenden Seiten vorzugsweise bogenförmige Prägeeindrücke aufweist. Die Längsseiten bleiben in der bevorzugten Ausführungsform unberührt. Sie können aber auch durchgestanzt oder ebenfalls geprägt sein. Die angestrebte Bodenneigung des Lappens wird durch unterschiedlich tiefe Prägeeindrücke erreicht. Diese Ausbildung hat den Vorteil, daß der Prägelappen zumindest an zwei Seiten noch mit dem Rohrmantel verbunden ist.

Die Zwischenhülse sollte im Sinne des Korrosionsschutzes aus Kunststoff bestehen, kann aber auch aus anderen Materialien gefertigt sein. Sie weist am einen Ende einen radial überstehenden Bund auf, der über eine Anlaufschräge dichtend und damit korrosionsverhindernd am Einzug des einen Rohrendes anliegt. Der Bund glättet außenseitig außerdem den Übergang zwischen den beiden Rohrstücken und sorgt für eine optisch ansprechende Außenkontur. Er kann durch Farbgebung, Materialwahl und dgl. auch direkt für Design-Zwecke eingesetzt werden.

Wenn als Rückhalteorgan ein schräger, federnder Präge- oder Stanzlappen vorgesehen ist, empfiehlt es sich, die Zwischenhülse mit einem Mantelschlitz zu versehen. Der Lappen hat beim Aufstecken dadurch freie Bahn und kann unmittelbar am Lochrand des eingezogenen Endes einrasten.

Das erfindungsgemäße Rohr eignet sich in der Weiterverarbeitung oder Weiterverwertung für unterschiedliche Einsatzzwecke. Besonders günstig lassen sich aus dem erfindungsgemäßen Rohr Fahrzeuganbauteile, wie Sturzbügel, Dachgepäckträger, Ersatzradhalter, Anhängevorrichtungen und dgl. andere Formen von Rohrgestängen herstellen. Hier kommen neben der mechanischen Stabilität, der Korrosionsfestigkeit und der guten Optik des erfindungsgemäßen Rohres auch weitere Vorteile zum Tragen. Das Rohr bzw. das Rohrgestänge können unmittelbar am Einsatzort bei der Montage vom Kunden selbst zusammengesteckt werden. Dies verringert auch die Transportprobleme, da das Rohr bis zum Einsatzort raumsparend in Einzelteilen versandt werden kann.

Die Erfindung ist in den Zeichnungen beispielsweise und schematisch dargestellt. Im einzelnen zeigen :

Fig. 1 :      das erfindungsgemäße mehrteilige Rohr in der weiteren Ausgestaltung als Fahrzeuganbauteil,

Fig. 2 :      das Rohr an der Verbindungsstelle im Längsschnitt,

Fig. 3 :      in vergrößerter und im Längsschnitt gedrehter Detailansicht den Lappeneingriff der Anordnung gem. Fig. 2,

Fig. 4 und 5 :     das Rohrstück mit eingezogenem Ende in verschiedenen Ansichten,

Fig 6 und 7 :     das andere Rohrstück mit dem eingeprägten Lappen in verschiedenen Ansichten und

Fig. 8 :      die Zwischenhülse in Draufsicht.

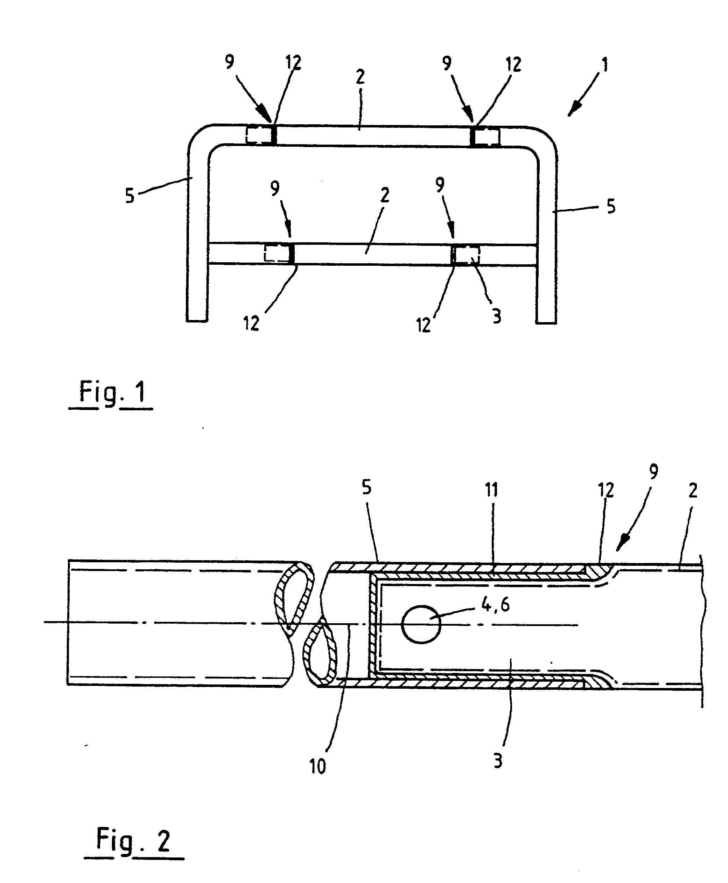

Fig. 1 zeigt ein zylindrisches Rohr (1) aus mehreren Rohrstücken (2,5) aus Stahl, die an Verbindungsstellen (9) ineinandergesteckt und formschlüssig unter Einlage einer Zwischenhülse (11) aus Kunststoff aneinander geführt sind (vgl. Fig 2). Das Rohr bzw. das Rohrgestänge (1) ist hier im weiteren als Fahrzeuganbauteil, speziell als Stoßfänger für Front- und Heckpartie, ausgestaltet.

Die Rohrstücke (5) besitzen gebogene Abschnitte und Abzweigstutzen. Die Verbindungsstellen (9) zu den anderen Rohrstücken (2) befinden sich vorzugsweise in geraden Abschnitten der Rohrstücke (5). Sie können bei entsprechender Hülsengestaltung aber auch an anderen Stellen sitzen. Im gezeigten Ausführungsbeispiel sind die Rohrstücke (2) als einfache gerade Rohre ausgebildet. Die Rohrstücke (2, 5) können für andere Einsatzzwecke auch eine andere Gestaltung haben.

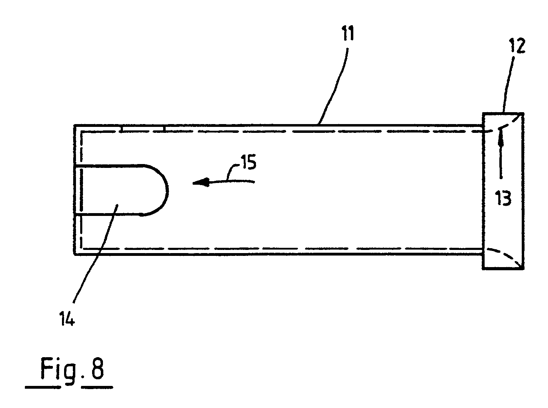

Im gezeigten Ausführungsbeispiel wird eine durchgängige Rohrkontur angestrebt. Die Rohrstücke (2, 5) besitzen daher im wesentlichen gleiche Außendurchmesser, die an den Verbindungsstellen (9) fast nahtlos über einen Bund (12) der Zwischenhülse (11) (vgl. Fig. 2 und 8) ineinander übergehen. Für andere Verwendungszwecke können die Außenkonturen auch variiert werden.

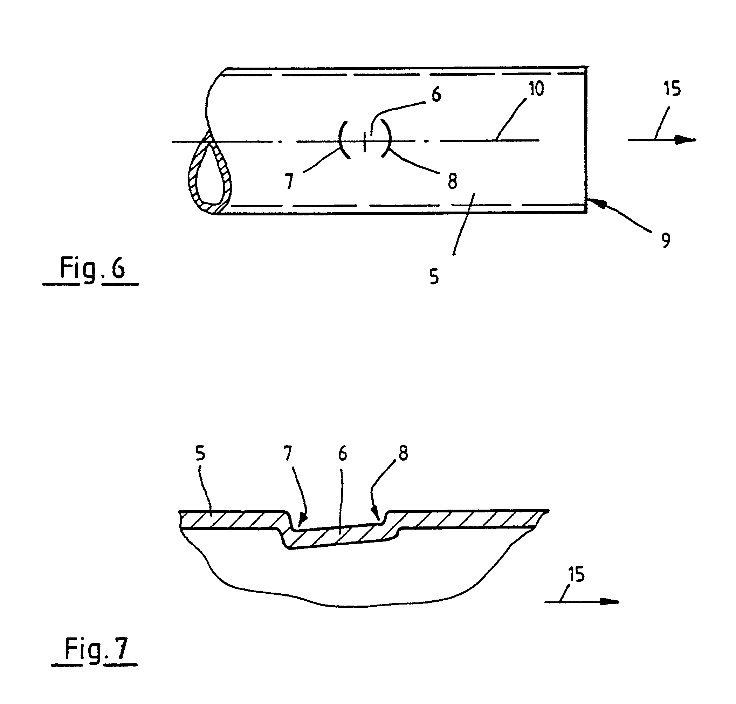

Die Fig. 2 bis 8 verdeutlichen die Gestaltung der einzelnen Teile des Rohrs (1) und ihre Verbindung untereinander. Fig. 2 zeigt eine Verbindungsstelle (9) im Längsschnitt. Das eine Rohrstück (2) besitzt ein um das Maß der Hülsen- und Rohrwanddicke eingezogenes Ende (3), mit dem es in das gegenüberliegende Rohrstück (5) eintaucht. Auf das eingezogene Ende (3) ist die Zwischenhülse (11) unter dichter Anlage paßgenau aufgesteckt. Die Zwischenhülse (11) ihrerseits steckt wiederum unter dichter formschlüssiger Führung im Rohrstück (5). Der Verbund ist in Längsrichtung (10) durch ein oder mehrere Rückhalteorgane (6) gesichert. In den Ausführungsbeispielen ist jeweils nur ein Rückhalteorgan dargestellt.

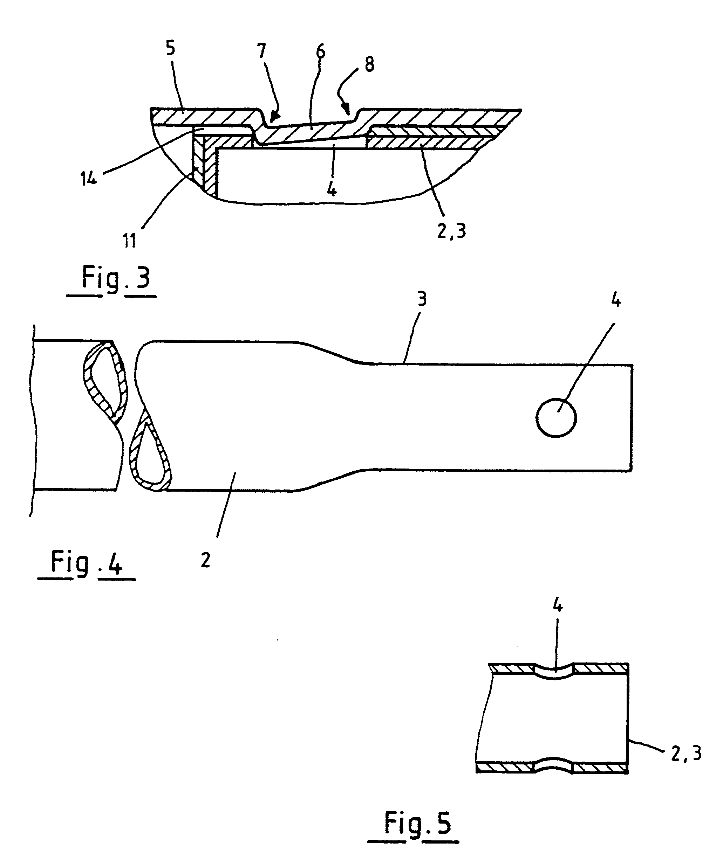

Wie Fig. 3 bis 5 und 8 verdeutlichen, besitzt das eingezogene Rohrstückende (3) am stirnseitigen Ende eine im wesentlichen kreisrunde Mantelöffnung (4). Die Zwischenhülse (11) hingegen weist an der gleichen Stelle einen Mantelschlitz (14) auf, der zur vorderen Stirnseite (in Aufsteckrichtung (15) der Hülse gesehen) offen ist. Wie Fig. 3 verdeutlicht, werden beim Aufstecken der Zwischenhülse (11) die beiden Mantelöffnungen (4, 14) zur Deckung gebracht.

Das andere Rohrstück (5) besitzt im Bereich der Verbindungsstelle (9) einen durchgehende zylindrische Rohrkontur. In Höhe der Mantelöffnungen (4, 14) ist ein Prägelappen (6) von außen eingedrückt und steht nach innen vor. Der Boden des Lappens (6) ist zum einen längsgewölbt und erstreckt sich zum anderen entgegen der Aufsteckrichtung (15) des Rohrstückes (5) schräg nach innen. Dies wird erreicht durch zwei quer zur Längsachse (10) gerichtete, gebogene Prägeeindrücke (7, 8), von denen der gegenüber dem Rohrende bzw. der Verbindungsstelle (9) entfernter liegende Prägeeindruck (7) tiefer ist als der andere Prägeeindruck (8). Die Prägeeindrücke (7, 8) sind in Längsrichtung (10) voneinander distanziert, wobei aber der zwischen ihnen liegende Lappenbereich etwas mitabgesenkt wird. Der Prägelappen (6) erhält hierdurch eine der Mantelöffnung

3

EP 0 332 209 B1

(4) entsprechende, im wesentlichen kreisförmige Gestalt, wobei er an allen Seiten mit dem Rohrmantel verbunden bleibt.

Zum Verbinden der Rohrstücke (2, 5) wird zunächst die Zwischenhülse (11) auf das eingezogene Ende (3) bis zum Anschlag aufgesteckt und beide Teile zusammen dann so in das Rohrstück (5) eingeführt, daß der Lappen (6) durch den Mantelschlitz (14) der Zwischenhülse gleitet und in der Mantelöffnung (4) des eingezogenen Endes (3) einrastet. Hierzu ist der Lappenboden am Prägeeindruck (8) gerade so weit abgesenkt, daß er über das eingezogene Ende (3) und durch den Schlitz (14) gleiten kann ohne stirnseitig hängen zu bleiben. Durch die schräge Lage des Lappenbodens wird das Austecken erleichtert und zugleich ein unlösbarer Verbund erzielt. Das abwärts gerichtete Lappenende tritt so tief in die Mantelöffnung (4) ein, daß es gegen eine Auszugsbewegung sperrt. Mit der schrägen Bodenlage kann der Prägelappen (6) beim Aufstecken auf dem eingezogenen Ende (3) etwas federnd aufgleiten, nicht aber beim Abziehen ausweichen.

Die Zwischenhülse (11) weist an ihrem Ende einen radial bis auf Höhe der Außenkontur des Rohrstückes (5) vorstehenden Bund (12) auf. Letzterer besitzt innenseitig eine Anlaufschräge (13), die der Einzugsneigung des Rohrstückes (2) angepaßt ist. Die Bundbreite entspricht auch in etwa der Länge der Einzugsanschrägung. Über den Bund (12) geht die Außenkontur des Rohrstückes (5) fast nahtlos in die Außenkontur des anderen Rohrstückes (2) über.

Wie Fig. 1 zeigt, können die Rohrstücke (2) an beiden Stirnseiten ein eingezogenes Ende (3) aufweisen, während die anderen Rohrstücke (5) nur Aufnahmeöffnungen zeigen. Die Rohrstücke (2) können in Abwandlung aber auch auf der einen Seite ein Aufnahmeöffnung und auf dere anderen Seite ein eingezogenes Ende (3) besitzen. Entsprechend ändert sich dann die Gestaltung der anderen Rohrstücke (5).

Variationen des gezeigten Ausführungsbeispiels sind dahingehend möglich, daß die Rohrstücke (2,5) nicht durchgehend hohl sein müssen, sondern auch massive Bereiche besitzen können. Anstelle des eingezogenen Bereiches (3) kann ein Rohrstück auch eine entsprechende Aufweitung aufweisen. Anstelle von Prägelappen können auch Stanzlappen oder Kombinationsformen verwendet werden. Die Querschnittsgestaltung der Rohrstücke ist beliebig wählbar und kann statt der gezeigten Zylinderform auch bespielsweise oval oder polygonartig sein.

## Patentansprüche

1. Rohr, bestehend aus mehreren miteinander verbundenen Rohrstücken (2, 5), die unter Einlage eines Füllstoffs formschlüssig ineinandergesteckt sind, wobei der Füllstoff die Rohrstücke (2, 5) im Verbindungsbereich voneinander distanziert und die Rohrstücke (2, 5) sich umfangsseitig über den Füllstoff aneinander abstützen, dadurch **gekennzeichnet**, daß der Füllstoff als eine, auf dem einen Rohrstück aufgesteckte Zwischenhülse (11) ausgebildet ist und die Rohrstücke (2, 5) und die Zwischenhülse (11) an der Verbindungsstelle (9) durch eine alle Teile durchsetzende gemeinsame Quersicherung (6) gegen Auszug gesichert sind.

2. Rohr nach Anspruch 1, dadurch **gekennzeichnet**, daß das eine Rohrstück (2) ein eingezogenes Ende (3) aufweist, auf das die Zwischenhülse (11) aufgesteckt ist.

3. Rohr nach Anspruch 2, dadurch **gekennzeichnet**, daß der Außendurchmesser des eingezogenen Endes (3) so bemessen ist, daß die beiden Rohrstücke (2, 5) an der Stoßstelle (9) am Außenumfang fluchten.

4. Rohr nach einem der Ansprüche 1-3, dadurch **gekennzeichnet**, daß die Rohrstücke (2, 5) und die Zwischenhülse (11) fluchtende Mantelöffnungen (4, 14) und ein darin eingreifendes Rückhalteorgan (6) aufweisen.

5. Rohr nach Anspruch 4, dadurch **gekennzeichnet**, daß das Rückhalteorgan als vom äußeren Rohrstück (5) nach innen gedrückter Präge- oder Stanzlappen (6) ausgebildet ist.

6. Rohr nach Anspruch 5, dadurch **gekennzeichnet**, daß der Lappen (6) einen entgegen der Aufsteckrichtung (15) schräg nach innen geneigten Boden aufweist.

7. Rohr nach Anspruch 6, dadurch **gekennzeichnet**, daß der Lappen (6) zwei quer zur Längsachse (10) gerichtete Prägeeindrücke (7, 8) aufweist, von denen der zum Rohrende entfernt liegende Prägeeindruck (7) tiefer als der andere (8) ist.

8. Rohr nach einem der Ansprüche 4 bis 7, dadurch **gekennzeichnet**, daß die Zwischenhülse (11) eine zur Stirnseite offene, schlitzförmige Mantelöffnung (14) aufweist.

9. Rohr nach einem der Ansprüche 1-8, dadurch **gekennzeichnet**, daß die Zwischenhülse (11) am einen Ende einen Bund (12) aufweist, der zwischen den Rohrstücken (2, 5) nach außen vorragt und innenseitig eine der Einzugsneigung angepaßte Anlaufschräge (13) aufweist.

10. Rohr nach einem der Ansprüche 1-9, dadurch **gekennzeichnet**, daß die Rohrstücke (2, 5) auf der einen Seite ein eingezogenes Ende (3) und auf der anderen Seite eine Aufnahmeöffnung für das eingezogene Ende des Nachbarteiles aufweisen.

11. Rohr nach einem der Ansprüche 1-10, dadurch **gekennzeichnet**, daß die Rohrstücke (2, 5) aus Stahl und die Zwischenhülse (11) aus Kunststoff bestehen.

## Claims

1. Tube, comprising a plurality of interconnected tube pieces (2, 5) which are pushed into one another with form fit and with the insertion of a filler, the filler distancing the tube pieces (2, 5) from one another in the region of connection and the tube pieces (2, 5) being supported against one another peripherally via the filler, characterized in that the filler is constructed as an intermediate sleeve (11) pushed onto one tube piece, and the tube pieces (2, 5) and the intermediate sleeve (11) are secured against withdrawal at the point of connection (9) by a common transverse securing means (6) passing through all the parts.

2. Tube according to Claim 1, characterized in that one tube piece (2) has a narrowed end (3) onto which the intermediate sleeve (11) is pushed.

3. Tube according to Claim 2, characterized in that the external diameter of the narrowed end (3) is dimensioned such that the two tube pieces (2, 5) are flush at the joining point (9) on the external periphery.

4. Tube according to one of Claims 1 to 3, characterized in that the tube pieces (2, 5) and the intermediate sleeve (11) have flush casing openings (4, 14) and, engaging therein, a retaining member (6).

5. Tube according to Claim 4, characterized in that the retaining member is constructed as a stamped or punched tab (6) pressed inwards from the external tube piece (5).

6. Tube according to Claim 5, characterized in that the tab (6) has a base inclined obliquely inwards in opposition to the pushing-on direction (15).

7. Tube according to Claim 6, characterized in that the tab (6) has two stamped impressions (7, 8) directed transversely with respect to the longitudinal axis (10), of which the stamped impression (7) remote from the tube end is deeper than the other (8).

8. Tube according to one of Claims 4 to 7, characterized in that the intermediate sleeve (11) has a casing opening (14) which is slot-shaped and open to the end side.

9. Tube according to one of Claims 1 to 8, characterized in that the intermediate sleeve (11) has at one end a collar (12) which projects outwards between the tube pieces (2, 5) and has on the inside a ramped slope (13) matched to the inclination of the narrowing.

10. Tube according to one of Claims 1 to 9, characterized in that the tube pieces (2, 5) have on one side a narrowed end (3) and have on the other side a receiving opening for the narrowed end of the adjacent part.

11. Tube according to one of Claims 1 to 10, characterized in that the tube pieces (2, 5) are of steel and the intermediate sleeve (11) is of plastics.

## Revendications

1. Tube constitué par plusieurs éléments (2, 5) reliés entre eux, qui sont emboîtés les uns dans les autres selon une liaison par formes complémentaires moyennant l'insertion d'un matériau de remplissage, et dans lequel le matériau de remplissage sépare, dans la zone de jonction, les éléments tubulaires (2, 5), qui prennent appui les uns contre les autres, sur leur pourtour, par l'intermédiaire du matériau de remplissage, caractérisé par le fait que le matériau de remplissage est réalisé sous la forme d'une douille intercalaire (11) emmanchée sur un élément tubulaire et que les éléments tubulaires (2, 5) et la douille intercalaire (11) sont bloqués contre toute sortie, au niveau du point de jonction (9), par un dispositif de blocage transversal commun (6), qui traverse tous les éléments.

2. Tube suivant la revendication 1, caractérisé par le fait qu'un élément tubulaire (2) possède une extrémité rétrécie (3), sur laquelle est emmanchée la douille intercalaire (11).

3. Tube suivant la revendication 2, caractérisé par le fait que le diamètre extérieur de l'extrémité rétrécie (3) est dimensionné de manière que les deux éléments tubulaires (2, 5) sont alignés sur leur pourtour extérieur, au niveau du point d'aboutement (9).

4. Tube suivant l'une des revendications 1-3, caractérisé par le fait que les éléments tubulaires (2, 5) et ladouille intercalaire (11) comportent des ouvertures alignées (13, 14) dans leur enveloppe, un organe de retenue (6) s'engageant dans ces ouvertures.

5. Tube suivant la revendication 4, caractérisé par le fait que l'organe de retenue est agencé sous la forme d'une languette emboutie ou découpée (6) qui est repoussée vers l'intérieur par l'élément tubulaire extérieur (5).

6. Tube suivant la revendication 5, caractérisé par le fait que la languette (6) possède un fond qui est incliné vers l'intérieur à l'encontre de la direction d'enfichage (15).

7. Tube suivant la revendication 6, caractérisé par le fait que la languette (6) possède deux empreintes (7, 8) formées par emboutissage, qui sont dirigées transversalement par rapport à l'axe longitudinal (10) et parmi lesquelles l'empreinte (7), qui est éloignée de l'extrémité du tube, est plus profonde que l'autre (8).

8. Tube suivant l'une des revendications 4 à 7, caractérisé par le fait que la douille intercalaire (11) possède une ouverture en forme de fente (14) ouverte vers la face frontale.

9. Tube suivant l'une des revendications 1-8, caractérisé par le fait que la douille intercalaire (11) possède, à une extrémité, un collet (12), qui fait saillie extérieurement entre les éléments tubulaires (2, 5) et possède, intérieurement, une rampe montante (13) adaptée à l'inclinaison du rétrécissement.

10. Tube suivant l'une des revendications 1-9, caractérisé par le fait que les éléments tubulaires (2, 5) comportent, d'un côté, une extrémité rétrécie (3) et de l'autre côté, une ouverture de réception pour l'extrémité rétrécie de l'élément voisin.

11. Tube suivant l'une des revendications 1-10, caractérisé par le fait que les éléments tubulaires (2, 5) sont réalisés en acier et que la douille intercalaire (11) est formée d'une matière plastique.

Fig. 1

Fig. 2

Fig. 3

Fig. 4

Fig. 5

## Fig.6

## Fig.7

Fig. 8